(19) Europäisches Patentamt
European Patent Office
Office européen des brevets

(11) **EP 3 488 383 B1**

(12) **FASCICULE DE BREVET EUROPEEN**

(45) Date de publication et mention
de la délivrance du brevet:
**01.07.2020 Bulletin 2020/27**

(21) Numéro de dépôt: **17758578.3**

(22) Date de dépôt: **18.07.2017**

(51) Int Cl.:
**G06K 9/00** *(2006.01)*    **G06K 9/62** *(2006.01)*
**G06K 9/03** *(2006.01)*    **G06T 7/50** *(2017.01)*
**G06T 7/55** *(2017.01)*

(86) Numéro de dépôt international:
**PCT/FR2017/051957**

(87) Numéro de publication internationale:
**WO 2018/015654 (25.01.2018 Gazette 2018/04)**

(54) **PROCEDE ET DISPOSITIF D'AIDE A LA NAVIGATION D'UN VEHICULE**

VERFAHREN UND VORRICHTUNG ZUR UNTERSTÜTZUNG DER NAVIGATION EINES FAHRZEUGS

METHOD AND DEVICE FOR AIDING THE NAVIGATION OF A VEHICULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2016 FR 1656870**

(43) Date de publication de la demande:
**29.05.2019 Bulletin 2019/22**

(73) Titulaire: **Safran**
**75015 Paris (FR)**

(72) Inventeur: **HERNANDEZ LONDONO, Jorge Eduardo**
**77550 Moissy-Cramayel Cedex (FR)**

(74) Mandataire: **Cabinet Beau de Loménie**
**158, rue de l'Université**
**75340 Paris Cedex 07 (FR)**

(56) Documents cités:
• **KEVIN KARSCH ET AL: "Depth Extraction from Video Using Non-parametric Sampling", 7 octobre 2012 (2012-10-07), COMPUTER VISION ECCV 2012, SPRINGER BERLIN HEIDELBERG, BERLIN, HEIDELBERG, PAGE(S) 775 - 788, XP047019065, ISBN: 978-3-642-33714-7 cité dans la demande 2. Non-parametric Depth Estimation 6. Results**
• **LAVOUE GUILLAUME ET AL: "On the Efficiency of Image Metrics for Evaluating the Visual Quality of 3D Models", IEEE TRANSACTIONS ON VISUALIZATION AND COMPUTER GRAPHICS, 18 septembre 2015 (2015-09-18), XP011615445, LOS ALAMITOS, CA, US ISSN: 1077-2626, DOI: 10.1109/TVCG.2015.2480079 [extrait le 2016-06-29]**
• **HUANG WEICHENG ET AL: "Toward Naturalistic 2D-to-3D Conversion", IEEE TRANSACTIONS ON IMAGE PROCESSING, IEEE SERVICE CENTER, PISCATAWAY, NJ, US, vol. 24, no. 2, 1 février 2015 (2015-02-01), pages 724-733, XP011570187, ISSN: 1057-7149, DOI: 10.1109/TIP.2014.2385474 [extrait le 2015-01-12]**

**Description**

Arrière-plan de l'invention

L'invention concerne le domaine général de l'aide à la navigation d'un véhicule, tel que par exemple un véhicule aérien ou terrestre.

Elle se rapporte plus particulièrement à un procédé et à un système d'aide à la navigation utilisant des images colorimétriques d'une scène spatiale ainsi que des images résultant de l'application d'une méthode d'inférence 3D (trois dimensions) sur ces images.

De façon connue, la perception 3D d'une scène spatiale représente une information très importante pour les systèmes de navigation ou d'aide à la navigation. Cette perception est généralement obtenue en utilisant des systèmes d'acquisition 3D : télémètre laser, caméra ou photo stéréo, etc.

Il n'est toutefois pas toujours simple, suivant les environnements, d'accéder à ce type de systèmes. Par ailleurs, l'utilisation de systèmes monoculaires tels que des mono-caméras à bord des véhicules ou sur des équipements séparés (ex. téléphone intelligent aussi appelé « smart phone ») est de plus en plus courante.

L'inférence 3D a pour but d'estimer à partir d'images dites d'origine acquises par une mono-caméra ou un système d'acquisition équivalent, l'information 3D contenue dans ces images. A cet effet, les différentes méthodes d'inférence 3D existantes peuvent utiliser par exemple des indices géométriques et/ou sémantiques, relatifs à l'éclairage ou à la vidéo (occlusion, mouvement, etc.), etc., contenus dans l'image d'origine et qui permettent d'extraire une information de profondeur de la scène représentée sur l'image et des objets qui la composent. L'information 3D générée par ces méthodes peut prendre différentes formes :

- soit elle est représentée sous la forme d'une carte des profondeurs, utilisant généralement différents codes couleurs traduisant les profondeurs des différentes surfaces des objets composant la scène ;
- soit elle est représentée sous la forme d'une carte d'orientations, utilisant généralement différents codes couleurs traduisant l'orientation des vecteurs normaux aux différentes surfaces des objets composant la scène.

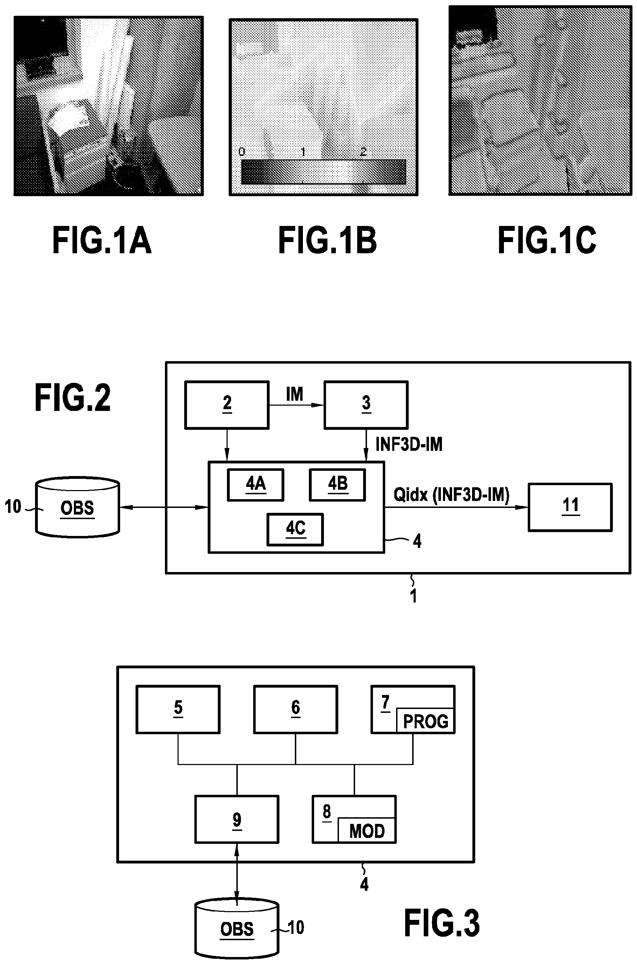

A titre illustratif, pour une image d'origine représentée à la **figure 1A,** les **figures 1B et 1C** représentent respectivement un exemple de carte des profondeurs et un exemple de carte des orientations obtenues à partir de cette image d'origine via une méthode d'inférence 3D.

On peut distinguer aujourd'hui trois grandes catégories de méthodes d'inférence 3D, à savoir :

- les méthodes fondées sur des contraintes géométriques et volumétriques : ces méthodes extraient des lignes, des plans, approximent certaines surfaces de la scène par des parallélépipèdes ou plus généralement par des formes 3D connues. Une telle méthode est décrite par exemple dans le document de Delage et al. intitulé « Automatic Single-Image 3D Reconstructions of Indoor Manhattan World Scenes », 2005 ;
- les méthodes fondées sur des analyses sémantiques : ces méthodes s'appuient sur la détection et/ou l'estimation de représentations sémantiques dans la scène permettant d'assigner des profondeurs. De telles représentations sont par exemple « le mur est vertical », « le sol est horizontal », « le ciel est à l'infini », etc. Un exemple d'une telle méthode est décrit notamment dans le document de Hoiem et al. intutilé « Seeing the World Behing the Images Spatial Layout For 3D Scene Understanding », 2005-2007 ; et
- les méthodes par apprentissage : ces méthodes utilisent des bases de données regroupant une pluralité de couples (image, profondeur) pour paramétrer et/ou définir un modèle ou une architecture et ainsi apprendre directement la relation existant entre l'image d'origine et l'information 3D qu'elle contient. Une telle méthode est décrite par exemple dans le document de Karsch et al. intitulé « Depth Transfert : Depth Extraction from Video Using Non-paramatric Smapling », 2014.

Le but de ces trois catégories de méthodes est bien entendu de fournir des images représentatives de l'information 3D contenue dans des images d'origines visuellement correctes pour qu'elles puissent être valorisées par les systèmes de navigation. Les méthodes d'inférence 3D par apprentissage sont les méthodes qui permettent aujourd'hui d'atteindre les meilleurs résultats, c'est-à-dire qui fournissent les images d'inférence 3D de meilleure qualité. Dans la suite de la description, on désigne par image d'inférence 3D l'image représentant l'information 3D contenue dans une image d'origine en appliquant une méthode d'inférence 3D. Aucune limitation n'est attachée à la forme prise par cette image (image représentant une carte des profondeurs ou une carte des orientations).

Pour déterminer la qualité d'une image d'inférence 3D, il est possible de comparer les données contenues dans cette image d'inférence 3D avec une vérité « terrain », autrement dit avec des mesures de profondeurs réalisées sur la scène réelle. Divers indices de qualité peuvent être définis à partir de ces mesures. Le choix d'un indice par rapport à un autre pour estimer la qualité d'une image d'inférence 3D peut être guidé par la forme notamment de l'information 3D représentée sur l'image d'inférence 3D, à savoir si cette image d'inférence 3D représente une carte des profondeurs ou une carte des orientations de l'image d'origine. On peut ainsi citer à titre d'exemples, et de façon non exhaustive, les indices de qualité suivants :

- pour une image d'inférence 3D représentant une carte des profondeurs :

   ◦ une erreur de profondeur relative moyenne, évaluée sur l'ensemble de l'image d'inférence 3D, et basée sur une norme L-1 (norme définie à partir d'une valeur absolue) et donnée par :

$$\frac{1}{N}\sum_{p=1}^{N}\frac{\left|d_p - d_p^*\right|}{d_p^*}$$

où N désigne le nombre de pixels de l'image d'inférence 3D, $d_p$ la profondeur associée au pixel p de l'image d'inférence 3D et $d_p^*$ la profondeur mesurée sur le terrain correspondant au pixel p;
   ◦ une erreur de profondeur relative moyenne basée sur une norme L-2 (norme au carrée) et donnée par :

$$\frac{1}{N}\sum_{p=1}^{N}\frac{\left(d_p - d_p^*\right)^2}{d_p^*}$$

- pour une image d'inférence 3D représentant une carte des orientations :

   ◦ un écart (ou erreur) angulaire moyen donné par :

$$\frac{1}{N}\sum_{p=1}^{N}\theta_p$$

où $\theta_p$ désigne l'angle entre le vecteur normal au pixel p de l'image d'inférence 3D et le vecteur normal mesuré sur la scène et correspondant à ce pixel ;
   ◦ un écart (ou erreur) angulaire donné par la médiane de l'ensemble constitué des angles $\theta_p$, p=1,...N. Pour rappel, la médiane d'un ensemble de valeurs est une valeur statistique qui représente la valeur séparant l'ensemble de valeurs en deux sous-ensembles de même taille.

La connaissance de tels indices de qualité est précieuse pour les systèmes de navigation utilisant des images d'inférence 3D, car ils peuvent juger de la pertinence d'utiliser ou pas ces images d'inférence dans l'aide à la navigation. Toutefois, les mesures « terrain » servant de références et nécessaires à l'évaluation des indices de qualité précités ne sont malheureusement pas toujours disponibles.

Objet et résumé de l'invention

La présente invention permet notamment de pallier à l'inconvénient précité en proposant un procédé d'aide à la navigation d'un véhicule comprenant :

- une étape de construction d'un modèle numérique définissant un indice de qualité d'une image d'inférence 3D résultant d'une application d'une méthode d'inférence 3D sur une image d'origine en fonction d'une pluralité de métriques de similarité définies entre l'image d'origine et l'image d'inférence 3D, ladite étape de construction utilisant un ensemble d'observations obtenues pour une pluralité d'Images d'inférence 3D de référence résultant de l'application d'au moins une méthode d'inférence 3D sur une pluralité d'images d'origine de référence, lesdites observations comprenant des valeurs mesurées d'informations 3D représentées sur les images d'inférence 3D de référence ;
- une étape d'acquisition d'une première image d'une scène spatiale avoisinant le véhicule ;

- une étape de génération à partir de la première image d'une seconde image d'inférence 3D en appliquant sur la première image une méthode d'inférence 3D ;
- une étape d'estimation de ladite pluralité de métriques de similarité entre ladite première image et ladite seconde image d'inférence 3D ;
- une étape d'évaluation de l'indice de qualité de la seconde image d'inférence 3D en utilisant le modèle numérique et ladite pluralité de métriques de similarité estimées ; et
- si l'indice de qualité estimé est supérieur à un seuil de référence prédéterminé, une étape d'utilisation de la seconde image d'inférence 3D pour aider la navigation du véhicule ;

et dans lequel l'étape de construction du modèle numérique comprend :

- une étape d'évaluation, pour chacune des observations :

  ◦ de l'indice de qualité défini par le modèle numérique en utilisant les valeurs des pixels des images d'inférence 3D de référence et les valeurs mesurées des informations 3D représentées par ces pixels ; et
  ◦ de la pluralité de métriques de similarité en utilisant les valeurs des pixels des images d'inférence 3D de référence et les valeurs des pixels des images d'origine de référence correspondantes ; et

- une étape de détermination du modèle numérique en appliquant une technique de régression sur les indices de qualité et les métriques de similarité évaluées lors de l'étape d'évaluation.

Corrélativement, l'invention vise aussi un système d'aide à la navigation d'un véhicule comprenant :

- un dispositif de construction d'un modèle numérique définissant un indice de qualité d'une image dite d'inférence 3D résultant d'une application d'une méthode d'inférence 3D sur une image d'origine en fonction d'une pluralité de métriques de similarité définies entre l'image d'origine et son image d'inférence 3D, ledit dispositif de construction étant configuré pour utiliser un ensemble d'observations obtenues pour une pluralité d'images d'inférence 3D de référence résultant de l'application d'au moins une méthode d'inférence 3D sur une pluralité d'images d'origine de référence, lesdites observations comprenant des valeurs mesurées d'informations 3D représentées sur les images d'inférence 3D de référence, ledit dispositif de construction du modèle numérique étant en outre configuré pour évaluer pour chacune des observations :

  ◦ l'indice de qualité défini par le modèle numérique en utilisant les valeurs des pixels des images d'inférence 3D de référence et les valeurs mesurées des informations 3D représentées par ces pixels ; et
  ◦ la pluralité de métriques de similarité en utilisant les valeurs des pixels des images d'inférence 3D de référence et les valeurs des pixels des images d'origine de référence correspondantes ; et

  et pour déterminer le modèle numérique en appliquant une technique de régression sur les indices de qualité et les métriques de similarité évaluées ;
- un dispositif d'acquisition d'une première image d'une scène avoisinant le véhicule ;
- un dispositif de génération à partir de la première image d'une seconde image d'inférence 3D en appliquant sur la première image une méthode d'inférence 3D ; et
- un dispositif d'évaluation d'une qualité de la seconde image d'inférence 3D comprenant :

  ◦ un module d'estimation de ladite pluralité de métriques de similarité entre ladite première image et ladite seconde image d'inférence 3D ;
  ◦ un module d'évaluation de l'indice de qualité de la seconde image d'inférence 3D en utilisant le modèle numérique et ladite pluralité de métriques de similarité estimées ;

le système d'aide à la navigation du véhicule étant configuré pour utiliser la seconde image d'inférence 3D si l'indice de qualité estimé est supérieur à un seuil de référence prédéterminé.

Le système d'aide est par exemple configuré pour éviter au véhicule des obstacles et/ou des collisions.

Ainsi, l'invention propose un nouvel indice de qualité donnant une bonne estimation de la qualité d'une image d'inférence 3D (seconde image au sens de l'invention) générée à partir d'une image d'origine (première image au sens de l'invention). Cet indice de qualité est avantageusement estimé à partir d'un modèle numérique préétabli en tenant compte d'observations réelles d'informations 3D (mesures acquises sur le terrain), et qui définit l'indice de qualité en fonction d'une pluralité de mesures de similarité calculées entre l'image d'origine et l'image d'inférence 3D correspondante. Une fois le modèle construit, on peut avantageusement s'affranchir de la connaissance de mesures terrain pour estimer la qualité d'une image d'inférence 3D.

Le modèle numérique peut être construit facilement à partir de mesures réelles (« terrain ») disponibles pour des images de référence. De telles mesures sont facilement accessibles ; il existe par exemple des bases de données mises à la disposition du public qui peuvent être utilisées pour permettre l'apprentissage (i.e. la construction) du modèle numérique. De telles bases sont par exemple les bases connues Make3D, MSR-V3D, KITTI, NYUDepth v1 et v2, etc. Elles regroupent notamment des mesures acquises via des capteurs de profondeur tels que des capteurs Kinect ou des lasers pour différentes scènes intérieures et/ou extérieures.

On note que l'invention utilise avantageusement, pour la construction du modèle numérique, des observations acquises pour différentes méthodes d'inférence 3D, ce qui permet d'exploiter plus efficacement les données accessibles et leur densité.

L'invention a donc une application privilégiée lorsque l'estimation de la qualité de l'image d'inférence 3D doit être fournie en temps réel. C'est le cas typiquement dans l'aide à la navigation où les images sont acquises en temps réel et une décision sur la prise en compte ou non de ces images doit être disponible rapidement pour que l'aide soit utile et pertinente à l'utilisateur final. Le seuil de référence considéré dans l'invention est choisi de sorte à écarter les images d'inférence 3D qui disposent d'une qualité insuffisante pour aider à la navigation du véhicule.

Par ailleurs, la prise en compte d'une pluralité de mesures de similarité permet de définir un indice de qualité qui est pertinent pour différentes méthodes d'inférence 3D. Il suffit à cet effet de prendre en compte, lors de la construction du modèle numérique, des mesures de similarité qui sont pertinentes pour une grande diversité de méthodes. En effet, les méthodes d'inférence 3D, suivant la catégorie à laquelle elles appartiennent, sont susceptibles de présenter des réponses substantiellement différentes. En prenant en compte un indice « composite » construit à partir de différentes métriques de similarité, il est possible de tenir compte de ces disparités et d'offrir un indice de qualité adapté à de nombreuses méthodes d'inférence 3D.

Ainsi, par exemple, la pluralité de métriques de similarité peut être choisie parmi :

- une norme L-1 ou L-2 évaluée entre les valeurs des pixels de l'image d'inférence 3D et les valeurs des pixels de l'image d'origine correspondante ;
- un produit scalaire évalué entre une matrice représentant les valeurs des pixels de l'image d'inférence 3D et une matrice représentant les valeurs des pixels de l'image d'origine correspondante ;
- un indice de Jaccard généralisé évalué entre un ensemble formé des valeurs des pixels de l'image d'inférence 3D et un ensemble formé des valeurs des pixels de l'image d'origine correspondante ;
- une corrélation statistique évaluée entre les valeurs des pixels de l'image d'inférence 3D et les valeurs des pixels de l'image d'origine correspondante ;
- une information mutuelle évaluée entre les valeurs des pixels de l'image d'inférence 3D et les valeurs des pixels de l'image d'origine correspondante ; et
- un indice structurel de similarité évalué entre les valeurs des pixels de l'image d'inférence 3D et les valeurs des pixels de l'image d'origine correspondante.

Bien entendu, cette liste n'est pas exhaustive et d'autres métriques de similarité peuvent être considérées.

Dans un mode particulier de réalisation, le modèle numérique utilisé dans l'invention est une fonction linéaire de la pluralité de métriques de similarité.

Autrement dit, l'indice de qualité estimé est une combinaison pondérée des métriques de similarité calculées entre la première image d'origine et la seconde image d'inférence 3D. Un tel modèle est particulièrement simple, et permet un calcul rapide de l'indice de qualité. Il est par ailleurs facile à construire.

La technique de régression utilisée lors de l'étape de détermination peut s'appuyer par exemple sur une méthode du Lasso.

Une telle méthode est connue en soi. Elle est décrite par exemple dans le document de R. Tibshirani intitulé « Regression shrinkage and selection via the lasso », J. Roy Statistical Society Serie B, 58(1), pages 267-288, 1996, et comprend une minimisation de moindres carrés sous contraintes avec pénalité.

La méthode du Lasso est particulièrement adaptée lorsqu'on tente d'expliquer une variable (ici, l'indice de qualité de l'image d'inférence 3D) de manière linéaire à partir d'une pluralité de variables potentiellement explicatives (ici, les métriques de similarité entre l'image d'origine et l'image d'inférence 3D considérée). Elle permet de considérer une pluralité de métriques de similarité sans avoir de connaissance *a priori* sur la pertinence de ces métriques. La méthode du Lasso permet en effet d'éliminer les métriques inutiles ayant peu d'influence sur l'indice de qualité.

Bien entendu, d'autres modèles numériques, plus complexes par exemple qu'un modèle linéaire, peuvent être envisagés, ainsi que d'autres méthodes de régression.

Comme mentionné précédemment, en fonction de la nature de l'information 3D représentée sur les images d'inférence 3D (profondeurs ou orientations des vecteurs normaux), certains indices de qualité peuvent être plus pertinents que d'autres.

Dans un mode particulier de réalisation, la seconde image d'inférence 3D est représentative d'une carte de profondeurs et le modèle numérique définit un indice de qualité correspondant à un pourcentage de pixels de l'image d'inférence 3D ayant des valeurs présentant un écart logarithmique ou relatif Inférieur à un premier seuil prédéterminé par rapport à des valeurs mesurées des informations 3D représentées sur ces pixels.

Le premier seuil est par exemple égal à 0.1 (i.e. erreur de 10% sur l'estimation de la profondeur relative ou en ordre de magnitude).

Dans un autre mode de réalisation, la seconde image d'inférence 3D est représentative d'une carte d'orientations et le modèle numérique définit un indice de qualité correspondant à un pourcentage de pixels de l'image d'inférence 3D ayant des valeurs présentant un écart moyen ou une médiane inférieur(e) à un second seuil prédéterminé par rapport à des valeurs mesurées des informations 3D représentées sur ces pixels.

Le second seuil est par exemple égal à 30°.

Bien entendu, d'autres indices de qualité que les indices précités peuvent être envisagés pour construire le modèle numérique. Toutefois, les deux indices de qualité précités ont été identifiés par les inventeurs comme pertinents pour un grand nombre de méthodes d'inférence 3D et permettent donc d'obtenir un indice de qualité adapté à plusieurs méthodes d'inférence 3D. En effet, la prise en compte d'un écart logarithmique ou relatif permet de mieux différencier une bonne inférence 3D d'une mauvaise inférence 3D sur l'ensemble des pixels de l'image. En outre, la prise en considération de pourcentages de « bons » pixels comme indices de qualité est plus robuste au bruit contenu dans les observations utilisées car il reflète la meilleure fraction de pixels valides au regard d'un seuil. Le seuil est ajusté pour gérer le niveau de bruit supporté par l'indice de qualité. Les seuils proposés des 0.1 et 30° sont des valeurs privilégiées déterminées expérimentalement par les inventeurs et permettant de bien gérer le niveau de bruit contenu dans les observations des bases de données.

Dans un mode particulier de réalisation, tout ou partie des étapes du procédé d'aide à la navigation sont déterminées par des instructions de programmes d'ordinateurs.

En conséquence, l'invention vise aussi un programme d'ordinateur sur un support d'informations, ce programme étant susceptible d'être mis en œuvre dans un système d'aide à la navigation ou plus généralement dans un ordinateur, ce programme comportant des instructions adaptées à la mise en œuvre d'étapes d'un procédé d'aide à la navigation tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- les figures 1A, 1B et 1C, déjà décrites, illustrent un exemple d'image colorimétrique (figure 1A) et d'images d'inférence 3D générées à partir de cette image colorimétrique (carte des profondeurs illustrée à la figure 1B et carte des orientations illustrée à la figure 1C) ;
- la figure 2 représente un système d'aide à la navigation conforme à l'invention, dans un mode particulier de réalisation ;
- la figure 3 représente un exemple d'architecture matérielle d'un dispositif d'évaluation d'une qualité d'une image d'inférence 3D équipant le système d'aide à la navigation représenté à la figure 2 ; et
- la figure 4 représente, sous forme d'ordinogramme, les principales étapes d'un procédé d'aide à la navigation selon l'invention dans un mode particulier de réalisation dans lequel il est mis en œuvre par le système d'aide à la navigation représenté à la figure 2.

Description détaillée de l'invention

La **figure 2** représente, dans son environnement, un système 1 d'aide à la navigation d'un véhicule (non représenté) conforme à l'invention, dans un mode particulier de réalisation.

Le système 1 d'aide à la navigation est par exemple embarqué à bord du véhicule. Il peut être configuré par exemple pour éviter au véhicule des obstacles et/ou des collisions. Aucune limitation n'est attachée à la nature du véhicule considéré, il peut s'agir aussi bien d'un véhicule aérien (ex. avion), que d'un véhicule terrestre, marin, etc.

Le système 1 d'aide à la navigation intègre toute les caractéristiques d'un système d'aide à la navigation classique (ex. système GPS (Global Positioning System), etc.). Il est en outre configuré pour utiliser, lors de l'aide à la navigation du véhicule, des images de scènes spatiales avoisinant le véhicule et susceptibles d'influencer la navigation de ce dernier, ainsi que diverses informations pouvant être extraites de ces images.

A cet effet, le système 1 d'aide à la navigation comprend :

- un dispositif 2 d'acquisition d'images, tel que par exemple une caméra ou un appareil photo, apte à acquérir des images de scènes spatiales susceptibles d'intervenir dans la navigation du véhicule. Dans l'exemple envisagé ici, les images acquises sont des images colorimétriques en rouge vert bleu (RVB ou RGB en anglais pour Red Green Blue). En variante, on peut envisager un dispositif d'acquisition d'images infrarouges ou codées en niveaux de gris, etc. ; et
- un dispositif 3 d'inférence 3D apte à générer, à partir d'images d'origine fournies par le dispositif 2 d'acquisition d'images, des images d'inférence 3D représentant l'information 3D contenues dans les images d'origine.

On note qu'aucune limitation n'est attachée à la méthode d'inférence 3D utilisée par le dispositif 3 : il peut s'agir indifféremment d'une méthode fondée sur des contraintes géométriques et volumétriques, d'une méthode fondée sur des analyses sémantiques ou d'une méthode par apprentissage. De même, aucune limitation n'est attachée à la nature de l'image d'inférence 3D générée par le dispositif 3 : il peut s'agir d'une carte de profondeurs comme d'une carte d'orientations.

Les hypothèses suivantes sont toutefois faites sur l'image d'origine et sur l'image d'inférence 3D correspondante fournie par le dispositif 3 :

- les changements de colorimétrie et de luminance de l'image colorimétrique RVB d'origine sont relatifs aux changements de profondeurs et aux changements d'orientation des surfaces de la scène représentée par l'image d'origine ;
- l'image d'origine et l'image d'inférence 3D générée à partir de cette image sont recalées l'une par rapport à l'autre (correspondance des pixels des images) ;
- la taille en pixels des objets dans l'image d'origine est la même que la taille en pixels des objets dans l'image d'inférence 3D générée ; et
- les propriétés de l'enveloppe spatiale de la scène (ex. ouverture et expansion des frontières de la scène, rugosité, etc.), sont similaires sur l'image d'origine et sur l'image d'inférence 3D.

De façon avantageuse, le système 1 d'aide à la navigation selon l'invention est configuré pour évaluer (et utiliser) la qualité des images d'inférence 3D générées par le dispositif 3 d'inférence 3D à partir des images d'origine qui lui sont fournies. Pour cela, le système 1 d'aide à la navigation comprend un dispositif 4 d'évaluation de la qualité des images d'inférence 3D générées par le dispositif 3 d'inférence 3D, qui dispose, dans le mode de réalisation décrit ici, de l'architecture matérielle d'un ordinateur.

Plus précisément, le dispositif 4 d'évaluation de la qualité des images d'inférence 3D comprend notamment, comme illustré à la **figure 3,** un processeur 5, une mémoire vive 6, une mémoire morte 7, une mémoire non volatile 8, et un module de communication 9.

Le module de communication 9 permet au dispositif 4 d'évaluation de communiquer avec les autres dispositifs du système 1 d'aide à la navigation. Cette communication se fait par exemple via des bus de données numériques reliant les dispositifs du système 1 entre eux ou des liaisons sans fil (ex. Bluetooth, etc.). Il permet en outre au système de navigation de communiquer avec une ou plusieurs bases de données (regroupées sous la référence 10), qui peuvent être externes au système de navigation, et être accessibles par exemple via un réseau de télécommunications. Ces bases de données regroupent des observations terrain OBS (mesures réelles d'informations 3D issues notamment de capteurs) utilisées par le système 1 d'aide à la navigation conformément à l'invention.

La mémoire morte 7 du dispositif d'évaluation 4 constitue un support d'enregistrement conforme à l'invention, lisible par le processeur 5 et sur lequel est enregistré un programme d'ordinateur PROG conforme à l'invention, comportant des instructions pour l'exécution de tout ou partie des étapes du procédé d'aide à la navigation selon l'invention.

Ce programme d'ordinateur PROG définit de façon équivalente des modules fonctionnels et logiciels ici, configurés pour mettre en œuvre lesdites étapes du procédé d'aide à la navigation selon l'invention. Ces modules fonctionnels s'appuient sur ou commandent les éléments matériels 5-9 du dispositif d'évaluation cités précédemment. Ils comprennent notamment ici (cf. figure 1) :

- un module 4A (ou dispositif) de construction d'un modèle numérique MOD définissant un indice de qualité d'une image d'inférence 3D résultant d'une application d'une méthode d'inférence 3D sur une image d'origine en fonction d'une pluralité de métriques de similarité définies entre l'image d'origine et son image d'inférence 3D. Le module 4A est configuré pour utiliser les informations 3D contenues dans les bases de données 10 et s'appuie à cet effet notamment sur le module de communication 9 du système 1 ;
- un module 4B d'estimation de la pluralité de métriques de similarité considérées dans le modèle numérique MOD, pour chaque image fournie par le dispositif 2 d'acquisition d'images et l'image d'inférence 3D correspondante fournie par le dispositif 3 d'inférence 3D ; et
- un module 4C d'évaluation d'un indice de qualité de chaque image d'inférence 3D fournie par le dispositif 3 d'inférence 3D en utilisant le modèle numérique et la pluralité de métriques de similarité estimées par le module 4B.

Les fonctions de ces différents modules sont décrites plus en détail ultérieurement.

Le système 1 d'aide à la navigation comprend en outre un dispositif 11 de navigation configuré pour utiliser les images d'inférence 3D fournies par le dispositif 3 d'inférence 3D dans l'aide à la navigation du véhicule en fonction de l'indice de qualité estimé par le module 4C pour ces Images.

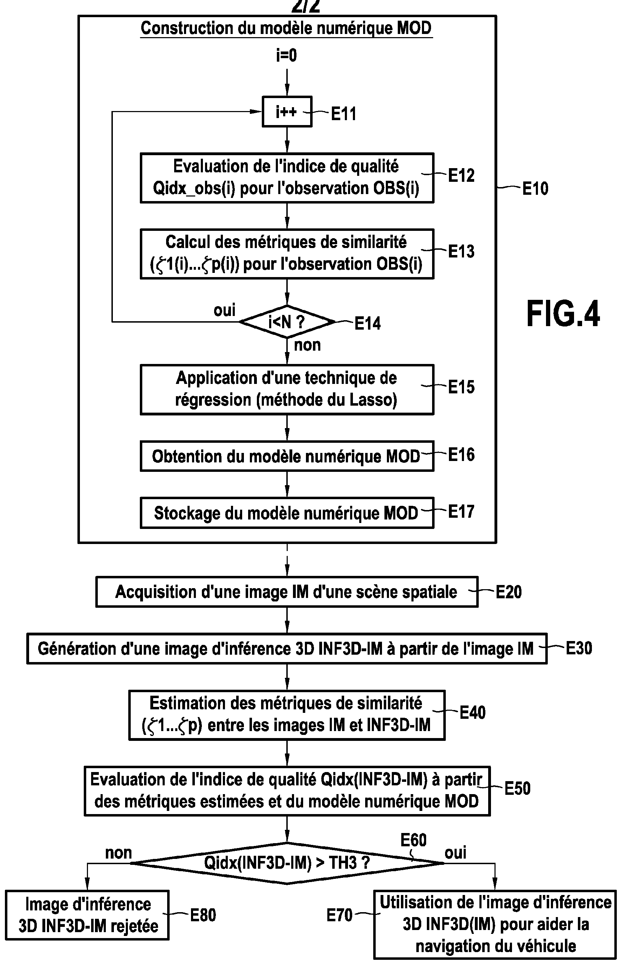

Nous allons maintenant décrire, en référence à la **figure 4,** les principales étapes d'un procédé d'aide à la navigation telles qu'elles sont mises en œuvre dans un mode particulier de réalisation par le système 1 d'aide à la navigation représenté à la figure 1.

Conformément à l'invention, le système 1 d'aide à la navigation est remarquable en ce qu'il est configuré pour estimer pour chaque image d'inférence 3D générée par le dispositif 3 d'inférence 3D, à partir d'une image acquise par le dispositif 2 d'acquisition d'images, un indice de qualité de cette image d'inférence 3D. A cet effet, le dispositif 4 d'évaluation du système 1 s'appuie sur un modèle numérique, MOD, construit lors d'une étape préliminaire (étape E10) à partir d'observations terrain OBS, regroupées dans la ou les bases de données 10. On note toutefois que le modèle numérique MOD n'est pas nécessairement figé et peut être mis à jour au fil du temps, par exemple lorsque les bases de données 10 sont alimentées avec d'autres observations.

Les bases de données 10 sont par exemple des bases accessibles au public alimentées par diverses observations terrains mesurées à l'aide de capteurs de profondeur de type Kinect par exemple ou de lasers sur des scènes intérieures et/ou extérieures. De telles bases de données sont par exemple, de façon non exhaustive, les bases connues Make3D, MSR-V3D, KITTI, NYUDepthv1 et v2, SUN RGB-D, B3DO, RMRC 2013 et 2014, etc.

Elles comprennent pour une pluralité d'images dite de référence de scènes spatiales acquises dans différents contextes (pas nécessairement en lien avec le contexte dans lequel se trouve le véhicule dont la navigation est assistée par le système 1 d'aide à la navigation), des images d'inférence 3D dites de référence générées à partir de ces images de référence (peu importe la méthode d'inférence 3D utilisée), ainsi que les informations 3D correspondantes (ex. profondeurs et orientations des vecteurs normaux mesurées sur tout tout ou partie des pixels des images) réellement mesurées sur le terrain et correspondant aux informations représentées sur les images d'inférence 3D de référence.

Le modèle numérique MOD construit par le dispositif 4 d'évaluation, et plus particulièrement par son module de construction 4A, définit un indice de qualité noté Qidx d'une image d'inférence 3D résultant de l'application d'une méthode d'inférence 3D (sans limitation sur la méthode d'inférence 3D considérée) sur une image d'origine en fonction d'une pluralité de métriques de similarité notées $(\xi 1,...,\xi p)$ définies entre l'image d'origine et l'image d'inférence 3D associée, p désignant un entier supérieur à 1.

Dans le mode de réalisation décrit ici, on envisage deux indices de qualité distincts (et donc deux modèles numériques distincts) selon si l'image d'inférence 3D représente une carte des profondeurs ou une carte des orientations. Plus précisément :

- si l'image d'inférence 3D est représentative d'une carte de profondeurs : le modèle numérique MOD est un modèle $MOD^{(D)}$ définissant un indice de qualité $Qidx^{(D)}$ correspondant à un pourcentage de pixels de l'image d'inférence 3D ayant des valeurs présentant un écart logarithmique ou relatif inférieur à un premier seuil prédéterminé TH1 par rapport à des valeurs mesurées des informations 3D représentées sur ces pixels ;
- si l'image d'inférence 3D est représentative d'une carte d'orientations : le modèle numérique MOD est un modèle $MOD^{(N)}$ définissant un indice de qualité $Qidx^{(N)}$ correspondant à un pourcentage de pixels de l'image d'inférence 3D ayant des valeurs présentant un écart moyen ou une valeur médiane inférieur(e) à un second seuil prédéterminé par rapport à des valeurs mesurées des informations 3D représentées sur ces pixels.

Par souci de simplification dans la suite, on omet les indexations $^{(D)}$ et $^{(N)}$ pour référencer le modèle numérique qui est construit et l'indice de qualité défini par ce modèle numérique, la façon de procéder pour construire l'un ou l'autre des modèles MOD$^{(D)}$ et MOD$^{(N)}$ étant identiques à la définition des indices de qualité correspondants près.

Dans le mode de réalisation décrit ici, les p métriques de similarité ($\xi$1,...,$\xi$p) utilisées pour définir l'indice de qualité sont choisies parmi :

- une norme L-1 ou L-2 évaluée entre les valeurs des pixels de l'image d'inférence 3D (par exemple notée D) et les valeurs des pixels de l'image d'origine (par exemple notée D$^{IM}$) telle que par exemple :

$$\xi = \sum_{p=1}^{N}\left|d_p - d_p^{IM}\right| \text{ (norme L-1)}$$

ou

$$\xi = \sum_{p=1}^{N}\left|d_p - d_p^{IM}\right|^2 \text{ (norme L-2)}$$

où N désigne le nombre de pixels de l'image D d'inférence 3D, $d_p$ la valeur du pixel p de l'image D$^{IM}$ d'inférence 3D et $d_p^{IM}$ la valeur du pixel p de l'image d'origine ;

- un produit scalaire évalué entre une matrice représentant les valeurs des pixels de l'image d'inférence 3D et une matrice représentant les valeurs des pixels de l'image d'origine ;
- un indice de Jaccard généralisé évalué entre un ensemble formé des valeurs des pixels de l'image D$^{IM}$ d'inférence 3D et un ensemble formé des valeurs des pixels de l'image D d'origine. L'indice de Jaccard J(D, D$^{IM}$) entre deux ensembles A et B est défini de façon connue par :

$$J(D, D^{IM}) = \frac{|D \cap D^{IM}|}{|D \cup D^{IM}|}$$

- une corrélation statistique évaluée entre les valeurs des pixels de l'image $D^{IM}$ d'inférence 3D et les valeurs des pixels de l'image D d'origine. La corrélation entre deux ensembles de valeurs correspondant respectivement aux images D et $D^{IM}$ est défini de façon connue par :

$$\rho(D, D^{IM}) = \frac{cov(D, D^{IM})}{\sigma_D \sigma_{D^{IM}}}$$

où cov désigne la covariance et $\sigma$ l'écart-type ;
- une information mutuelle évaluée entre les valeurs des pixels de l'image d'inférence 3D et les valeurs des pixels de l'image d'origine. Une définition de l'information mutuelle est donnée par exemple sur le site https://en.wikipedia.org/wiki/Mutual_information ; et
- un indice structurel de similarité évalué entre les valeurs des pixels de l'image d'inférence 3D et les valeurs des pixels de l'image d'origine. Une manière de calculer un tel indice structurel de similarité est décrite par exemple sur le site https://en.wikipedia.org/wiki/Structural_similarity.

Bien entendu, cette liste n'est pas exhaustive et d'autres métriques de similarité peuvent être utilisées, comme par exemple une métrique de similarité basée sur un descripteur GIST ou issue d'une analyse granulométrique des images.

Par ailleurs, dans le mode de réalisation décrit ici, le modèle numérique MOD définit l'indice de qualité Qidx comme une combinaison pondérée des métriques de similarité ($\xi$1,...,$\xi$p). Plus précisément, le modèle numérique MOD est une fonction linéaire donnée par :

$$\text{MOD : } Qidx = \beta0 + [\xi1 \quad \xi2 \quad ... \quad \xip]^T.[\beta1 \quad \beta2 \quad ... \quad \betap]$$

où $\beta$0 est une constante, $\beta$1, $\beta$2, ...,$\beta$p sont des coefficients (ex. réels) de pondération des métriques de similarité, et $^T$ désigne l'opérateur de transposition.

Pour estimer la constante $\beta$0 et les coefficients de pondération $\beta$1, $\beta$2, ..., $\beta$p, le module de construction 4A calcule, à partir de chaque observation OBS(i) (i nombre entier supérieur à 1) disponible dans la base de données 10 et pertinente pour la construction du modèle numérique MOD (étape E11), l'indice de qualité Qidx_obs(i) observé pour l'image d'inférence 3D (étape E12). Chaque observation OBS(i) comprend ici une image d'inférence 3D de référence INF3D(i) générée à partir d'une image d'origine de référence I(i) (peu importe la méthode d'inférence utilisée) et des mesures réelles OBS3D(i) (i.e. valeurs mesurées au moyen de capteurs par exemple) de tout ou partie des informations 3D représentées sur les pixels de l'image d'inférence 3D de référence. Bien entendu, on ne tient compte que des observations pertinentes pour le modèle numérique recherché (i.e. MOD$^{(D)}$ ou MOD$^{(N)}$), c'est-à-dire uniquement les observations représentant des cartes de profondeurs si MOD = MOD$^{(D)}$ ou uniquement les observations représentant des cartes d'orientations si MOD = MOD$^{(N)}$.

Comme mentionné précédemment, si l'image d'inférence 3D INF3D(i) représente une carte des profondeurs, l'indice de qualité observé calculé Qidx_obs(i) est alors un pourcentage de pixels de l'image d'inférence 3D INF3D(i) ayant des valeurs présentant un écart logarithmique ou relatif moyen $\delta1$ inférieur au premier seuil prédéterminé TH1 avec les valeurs mesurées OBS3D(i) des pixels.

Ainsi, par exemple, le module de construction 4A peut considérer comme écart $\delta1$ l'écart relatif moyen défini à partir d'une norme L-1 (norme définie à partir d'une valeur absolue) par :

$$\delta1 = \frac{1}{N}\sum_{p=1}^{N} \frac{|d_p - d_p^*|}{d_p^*}$$

où N désigne le nombre de pixels de l'image d'inférence 3D INF3D(i), $d_p$ la profondeur associée au pixel p de l'image d'inférence 3D INF3D(i) et $d_p^*$ la profondeur mesurée sur le terrain correspondant au pixel p extraite des mesures OBS3D(i).

Selon un autre exemple, le module de construction 4A peut considérer comme écart $\delta1$ l'écart relatif moyen défini à partir d'une norme L-2 (norme au carrée) par :

$$\delta1 = \frac{1}{N}\sum_{p=1}^{N} \frac{(d_p - d_p^*)^2}{d_p^*}$$

Selon un autre exemple encore, le module de construction 4A peut considérer comme écart $\delta1$ l'écart logarithmique relatif moyen défini par :

$$\delta1 = \frac{1}{N}\sum_{p=1}^{N} \left(log_{10}(d_p) - log_{10}(d_p^*)\right)$$

Dans le mode de réalisation décrit ici, on choisit préférentiellement le premier seuil TH1 égal à 0.1. Ce seuil de 0.1 équivaut à une erreur de 10% relative ou en ordre de magnitude sur l'estimation faite par la méthode d'inférence 3D, autrement dit pour une profondeur d'un mètre estimée on mesure le nombre de pixels à +/- 0.1 mètre d'écart.

Si l'image d'inférence 3D INF3D(i) représente en revanche une carte des orientations, l'indice de qualité Qidx_obs(i) observé calculé est un pourcentage de pixels de l'image d'inférence 3D INF3D(i) ayant des valeurs présentant un écart moyen ou une valeur médiane $\delta2$ inférieur(e) à un second seuil prédéterminé TH2 avec les valeurs mesurées OBS3D(i) des pixels.

Ainsi, par exemple, le module de construction 4A peut considérer comme écart $\delta2$ l'écart moyen défini par :

$$\delta2 = \frac{1}{N}\sum_{p=1}^{N} \theta_p$$

où $\theta_p$ désigne l'angle entre le vecteur normal au pixel p de l'image d'inférence 3D INF3D(i) et le vecteur normal mesuré sur la scène et correspondant à ce pixel.

Selon un autre exemple, le module de construction 4A peut considérer comme écart δ2 la valeur médiane de l'ensemble constitué des angles ($\theta_1$, $\theta_2$,...,$\theta_N$).

Dans le mode de réalisation décrit ici, on choisit préférentiellement le seuil TH2 égal à 30°. Les inventeurs ont en effet observé que ce seuil TH2, comme le premier seuil TH1 de 0.1 défini précédemment, permettent de prendre en compte le niveau de bruit affectant généralement les observations OBS(i) de la base de données 10.

Bien entendu, d'autres indices de qualité que des pourcentages de « bons pixels » ou d'autres écarts peuvent être considérés pour mettre en œuvre l'invention. Par exemple, on peut envisager comme écart δ1, une erreur RMSE (pour Root Mean Square Error ou racine carrée d'une erreur quadratique moyenne) linéaire ou logarithmique définie par :

$$\delta 1 = \sqrt{\frac{1}{N} \sum_{p=1}^{N} (d_p - d_p^*)^2}$$

ou

$$\delta 1 = \sqrt{\frac{1}{N} \sum_{p=1}^{N} (log_{10}(d_p) - log_{10}(d_p^*))^2}$$

Les inventeurs ont toutefois constaté que les métriques de similarité relatives ont tendance à pénaliser davantage les images d'inférence 3D présentant des différences par rapport aux valeurs mesurées au niveau des faibles profondeurs. Au contraire, les métriques de type RMSE pénalisent davantage les images d'inférence 3D qui présentent des différences par rapport aux valeurs mesurées au niveau des profondeurs importantes. Les métriques logarithmiques (en particulier basées sur un logarithme en base 10, $log_{10}$) pénalisent les images d'inférence 3D en fonction des ordres d'amplitude des profondeurs. Ces métriques de similarité logarithmiques constituent donc un meilleur indicateur de la qualité des images d'inférence 3D pour une évaluation globale sur l'ensemble des profondeurs de la scène spatiale considérée.

De même, d'autres valeurs de seuils TH1 et TH2 peuvent être envisagées, comme par exemple TH2=11.25° ou 22.5°. Comme mentionné précédemment, ces valeurs de seuil permettent de tenir compte du bruit affectant les bases de données de référence utilisées pour construire le modèle numérique MOD. En effet, les métriques moyennes sont relativement sensibles à la qualité des mesures terrain utilisées. Elles s'appuient sur des hypothèses assez fortes sur la qualité des mesures : données sans bruit, denses, précises, absence de données manquantes, images de même résolution, etc. Or les bases de données disponibles pour construire le modèle numérique ne respectent généralement pas l'ensemble de ces contraintes : les mesures terrain contenues dans les bases (ex. profondeurs mesurées) sont souvent acquises au moyen de capteurs de profondeur bruités (ex. capteurs de type Kinect), et n'ont pas toujours la densité escomptée (ex. nuage de points scanné par un laser).

Pour chaque observation OBS(i) pertinente pour la construction du modèle numérique MOD, le module de construction 4A évalue par ailleurs les valeurs observées des métriques de similarité (ξ1,...,ξp) relatives à cette observation (étape E13), notées par la suite (ξ1obs(i),...,ξpobs(i)). A cet effet, il utilise les valeurs des pixels de l'image d'inférence de référence INF3D(i) et les valeurs des pixels de l'image d'origine de référence correspondante I(i).

Le module de construction 4A évalue les indices de qualité observés et les valeurs observées des métriques de similarité pour chaque observation OBS(i) disponible dans la base de données 10. On suppose que N observations sont disponibles, i.e. i=1,...,N (cf. étape d'incrémentation E11 et étape test E14).

Puis, le module de construction 4A utilise les indices de qualité observés Qidx_obs(i) et les valeurs observées des métriques de similarité (ξ1obs(i),...,ξpobs(i)) calculés pour l'ensemble des observations OBS(i), i=1,...,N, pour déterminer le modèle numérique MOD.

A cet effet, il applique une technique de régression sur les valeurs observées des indices de qualité et de métriques de similarité calculées (étape E15).

Dans le mode de réalisation décrit ici, la technique appliquée est la méthode du Lasso. Cette méthode est décrite en détail par exemple dans le document de R. Tibshirani intitulé « Regression shrinkage and selection via the lasso », J. Roy Statistical Society Serie B, 58(1), pages 267-288, 1996. Elle s'appuie sur une minimisation des moindres carrés sous contraintes avec pénalité.

Plus particulièrement ici, la technique du Lasso consiste à minimiser une somme d'erreurs au carré sous contrainte, ladite contrainte portant sur une norme L-1 définie sur les coefficients β1, β2,..., βp. Dans le mode de réalisation décrit ici, la technique du Lasso est ainsi utilisée pour estimer les variables $\beta 0, \beta 1, \beta 2, ..., \beta p$ vérifiant :

$$\left(\hat{\beta}0, \hat{\beta}1, \hat{\beta}2, ..., \hat{\beta}p\right) = argmin\left\{\frac{1}{2N}\sum_{i=1}^{N}\left(Qidx\_obs(i) - \beta 0 - \sum_{j=1}^{p}\beta j.\xi jobs(i)\right)^2 + \lambda\sum_{j=1}^{p}|\beta j|\right\}$$

où $(\hat{\beta}0, \hat{\beta}1, \hat{\beta}2, ..., \hat{\beta}p)$ désignent les variables estimées, N le nombre d'observations considérées, et $\lambda$ est un paramètre de régularisation réel positif. La valeur de $\lambda$ peut être choisie de manière quelconque. Cependant, plus la valeur de $\lambda$ est choisie petite, plus le nombre de métriques de similarité sélectionnées par la méthode du Lasso sera grand.

On note qu'avantageusement, la technique du Lasso permet de supprimer les métriques de similarité redondantes. Autrement dit, pour ces métriques, le coefficient $\hat{\beta}$ estimé par la méthode du Lasso est nul. En outre, en raison de la prise en compte lors de la minimisation d'une contrainte établie sur la norme des coefficients $\beta 1, \beta 2,..., \beta p$, on s'assure que $|\hat{\beta}j|$, j=1,...,p reflète la puissance de chaque métrique de similarité $\xi j$ dans le calcul de l'indice de qualité.

Suite à l'application de la technique du Lasso, le module de construction 4A dispose d'un modèle numérique MOD pour l'indice de qualité donné par (étape E16) :

$$MOD : Qidx = \beta 0 + [\xi 1 \quad \xi 2 \quad ... \quad \xi p]^T.[\hat{\beta}1 \quad \hat{\beta}2 \quad ... \quad \hat{\beta}p]$$

ou de façon équivalente :

$$MOD : Qidx = \beta 0 + \sum_{j=1}^{p}\hat{\beta}j.\xi j$$

Le modèle numérique MOD est alors stocké par le module de construction 4A dans la mémoire non volatile 8 du dispositif 4 d'évaluation (étape E17).

On note que l'invention ne se limite pas d'une part à un modèle numérique linéaire, ni d'autre part à l'utilisation d'une méthode de Lasso pour déterminer le modèle numérique. Des modèles numériques plus complexes (ex. quadratiques ou polynomiaux) peuvent être envisagés de même que d'autres méthodes d'optimisation, comme par exemple d'autres méthodes de régression robustes tels que les méthodes dites de M-estimateurs, LTS (« Least Trimmed Squares »), régression de Ridge, Elastic Net, régression bayésienne, etc.

Conformément à l'invention, le modèle numérique MOD peut alors être utilisé pour évaluer la qualité d'une image d'inférence 3D générée à partir d'une image d'origine, indépendamment de la méthode d'inférence 3D utilisée. On note que le modèle numérique MOD peut être construit à tout moment avant l'évaluation de la qualité de l'image, typiquement lors d'une phase préliminaire décorrélée de son utilisation, potentiellement bien en amont de celle-ci.

On note par ailleurs que le modèle numérique MOD peut être soit un modèle numérique adapté à des images d'inférence 3D de type carte des profondeurs soit un modèle numérique adapté à des images d'inférence 3D de type carte des orientations. Si le système de navigation est amené à traiter les deux types d'images, alors un modèle numérique distinct pour chaque type d'images est construit par le module de construction 4A et stocké dans la mémoire non volatile 8.

Pour illustrer l'utilisation du modèle numérique MOD par le système de navigation 1, on suppose maintenant que ce dernier acquiert, par l'intermédiaire de son dispositif 2 d'acquisition, une image IM d'une scène spatiale susceptible d'influencer la navigation du véhicule auquel il est rattaché (étape E20). L'image IM est ici une image colorimétrique RVB comme mentionné précédemment. Il s'agit d'une première image au sens de l'invention.

Cette image IM est fournir par le dispositif 2 d'acquisition au dispositif 3 d'inférence 3D. Le dispositif 3 d'inférence 3D applique sur l'image IM une méthode d'inférence 3D pour extraire de l'image IM l'information 3D qu'elle contient et génère une image d'inférence 3D INF3D-IM (seconde image au sens de l'invention) (étape E30).

Aucune limitation n'est attachée à la méthode d'inférence 3D utilisée par le dispositif 3 pour générer l'image d'inférence 3D INF3D-IM (méthodes basées sur des contraintes géométriques et/ou volumétriques, méthodes basées sur des contraintes sémantiques, méthodes par apprentissage, etc.). Par ailleurs, aucune limitation n'est attachée non plus à la forme de l'image d'inférence 3D INF3D-IM : il peut s'agir ainsi aussi bien d'une carte des profondeurs que d'une carte des orientations.

Puis le dispositif 4 d'évaluation du système 1 d'aide à la navigation estime à partir des images IM et INF3D-IM (et des valeurs de leurs pixels) chacune des métriques de similarité $\xi j$, j=1,...,p (étape E40). On obtient alors les métriques estimées $\xi estj$, j=1,...,p.

Le dispositif 4 d'évaluation évalue l'indice de qualité Qidx(INF3D-IM) de l'image d'inférence 3D INF3D-IM en reportant dans le modèle numérique MOD les métriques de similarité ainsi estimées ξestj, j=1,...,p (étape E50). Plus précisément, si l'image d'inférence 3D INF3D-IM est une carte des profondeurs, il reporte ces métriques dans le modèle MOD$^{(D)}$ correspondant à une carte des profondeurs, sinon l'image d'inférence 3D INF3D-IM est une carte des orientations, il reporte ces métriques dans le modèle MOD$^{(N)}$ correspondant à une carte des orientations.

L'indice de qualité Qidx(INF3D-IM) est ensuite fourni au dispositif 11 de navigation du système 1 qui estime à partir de cet indice si la qualité de l'image INF3D-IM est suffisante pour être utilisée dans la navigation du véhicule. A cet effet, le dispositif 11 de navigation compare par exemple la valeur de l'indice de qualité Qidx(INF3D-IM) par rapport à un seuil de référence TH3 (étape test E60). Le seuil de référence TH3 peut être déterminé expérimentalement de sorte à s'assurer que l'image d'inférence 3D est de qualité suffisante pour tirer profit des informations contenues dans cette image lors de l'aide à la navigation du véhicule.

Si l'indice de qualité Qidx(INF3D-IM) est supérieur au seuil de référence TH3 (réponse oui à l'étape test E60), la qualité de l'image d'inférence 3D est considérée comme satisfaisante, et l'image d'inférence 3D INF3D-IM est utilisée par le dispositif 11 de navigation pour aider la navigation du véhicule (étape E70).

Par exemple, le dispositif 11 peut utiliser cette image pour évider des obstacles comme indiqué dans le document de J. Michels et al. intitulé « High speed Obstacle Avoidance using Monocular Vision », Proceedings of the 22nd International Conference on Machine Learning, 2005, ou pour la détection d'objets sur le parcours du véhicule comme décrit dans le document de X. Chen et al. intitulé « Monocular 3D Object Detection for Autonomous Driving », International Conference on Computer Vision (ICCV), 2015.

Sinon (réponse non à l'étape test E60), la qualité de l'image d'inférence 3D est considérée comme insuffisante et n'est pas utilisée par le dispositif 11 de navigation pour aider à la navigation du véhicule (étape E80).

On note que l'invention a été décrite en référence à un système d'aide à la navigation d'un véhicule. Toutefois l'indice de qualité déterminé grâce à l'invention peut être utilisé dans d'autres contextes dans lesquels des images d'inférence 3D sont générées et utilisées, comme par exemple pour un système de vidéo surveillance.

**Revendications**

1. Procédé d'aide à la navigation d'un véhicule comprenant :

    - une étape de construction (E10) d'un modèle numérique (MOD) définissant un indice de qualité d'une image d'inférence 3D résultant d'une application d'une méthode d'inférence 3D sur une image d'origine en fonction d'une pluralité de métriques de similarité définies entre l'image d'origine et l'image d'inférence 3D, ladite étape de construction utilisant un ensemble d'observations (OBS,10) obtenues pour une pluralité d'images d'inférence 3D de référence résultant de l'application d'au moins une méthode d'inférence 3D sur une pluralité d'images d'origine de référence, lesdites observations comprenant des valeurs mesurées d'informations 3D représentées sur les images d'inférence 3D de référence ;
    - une étape d'acquisition (E20) d'une première image (IM) d'une scène spatiale avoisinant le véhicule ;
    - une étape de génération (E30) à partir de la première image d'une seconde image d'inférence 3D (INF3D-IM) en appliquant sur la première image une méthode d'inférence 3D ;
    - une étape d'estimation (E40) de ladite pluralité de métriques de similarité entre ladite première image et ladite seconde image d'inférence 3D ;
    - une étape d'évaluation (E50) de l'indice de qualité de la seconde image d'inférence 3D en utilisant le modèle numérique et ladite pluralité de métriques de similarité estimées ; et
    - en fonction de l'indice de qualité estimé (E60), une étape d'utilisation (E70) de la seconde image d'inférence 3D pour aider la navigation du véhicule ;

    dans lequel l'étape de construction du modèle numérique comprend :

    - une étape d'évaluation (E12,E13), pour chacune des observations :

        ○ de l'indice de qualité défini par le modèle numérique en utilisant les valeurs des pixels des images d'inférence 3D de référence et les valeurs mesurées des informations 3D représentées par ces pixels ; et
        ○ de la pluralité de métriques de similarité en utilisant les valeurs des pixels des images d'inférence 3D de référence et les valeurs des pixels des images d'origine de référence correspondantes ; et

    - une étape de détermination (E15) du modèle numérique en appliquant une technique de régression sur les indices de qualité et les métriques de similarité évaluées lors de l'étape d'évaluation.

**2.** Procédé selon la revendication 1 dans lequel le modèle numérique (MOD) est une fonction linéaire de la pluralité de métriques de similarité.

**3.** Procédé selon la revendication 1 ou 2 dans lequel la technique de régression s'appuie sur une méthode du Lasso.

**4.** Procédé selon l'une quelconque des revendications 1 à 3 dans lequel la seconde image d'inférence 3D est représentative d'une carte de profondeurs et le modèle numérique définit un indice de qualité correspondant à un pourcentage de pixels de l'image d'inférence 3D ayant des valeurs présentant un écart logarithmique ou relatif inférieur à un premier seuil prédéterminé par rapport à des valeurs mesurées des informations 3D représentées sur ces pixels.

**5.** Procédé selon la revendication 4 dans lequel le premier seuil est égal à 0.1.

**6.** Procédé selon l'une quelconque des revendications 1 à 3 dans lequel la seconde image d'inférence 3D est représentative d'une carte d'orientations et le modèle numérique définit un indice de qualité correspondant à un pourcentage de pixels de l'image d'inférence 3D ayant des valeurs présentant un écart moyen ou une valeur médiane inférieur(e) à un second seuil prédéterminé par rapport à des valeurs mesurées des informations 3D représentées sur ces pixels.

**7.** Procédé selon la revendication 6 dans lequel ledit second seuil est égal à 30°.

**8.** Procédé selon l'une quelconque des revendications 1 à 7 dans lequel ladite pluralité de métriques de similarité est choisie parmi :

- une norme L-1 ou L-2 évaluée entre les valeurs des pixels de l'image d'inférence 3D et les valeurs des pixels de l'image d'origine correspondante ;
- un produit scalaire évalué entre une matrice représentant les valeurs des pixels de l'image d'inférence 3D et une matrice représentant les valeurs des pixels de l'image d'origine correspondante ;
- un indice de Jaccard généralisé évalué entre un ensemble formé des valeurs des pixels de l'image d'inférence 3D et un ensemble formé des valeurs des pixels de l'image d'origine correspondante ;
- une corrélation statistique évaluée entre les valeurs des pixels de l'image d'inférence 3D et les valeurs des pixels de l'image d'origine correspondante ;
- une information mutuelle évaluée entre les valeurs des pixels de l'image d'inférence 3D et les valeurs des pixels de l'image d'origine correspondante ; et
- un indice structurel de similarité évalué entre les valeurs des pixels de l'image d'inférence 3D et les valeurs des pixels de l'image d'origine correspondante.

**9.** Système (1) d'aide à la navigation d'un véhicule comprenant :

- un dispositif de construction (4A) d'un modèle numérique définissant un indice de qualité d'une image dite d'inférence 3D résultant d'une application d'une méthode d'inférence 3D sur une image d'origine en fonction d'une pluralité de métriques de similarité définies entre l'image d'origine et son image d'inférence 3D, ledit dispositif de construction étant configuré pour utiliser un ensemble d'observations obtenues pour une pluralité d'images d'inférence 3D de référence résultant de l'application d'au moins une méthode d'inférence 3D sur une pluralité d'images d'origine de référence, lesdites observations comprenant des valeurs mesurées d'informations 3D représentées sur les images d'inférence 3D de référence, ledit dispositif de construction du modèle numérique étant en outre configuré pour évaluer pour chacune des observations :

o l'indice de qualité défini par le modèle numérique en utilisant les valeurs des pixels des images d'inférence 3D de référence et les valeurs mesurées des informations 3D représentées par ces pixels ; et
o la pluralité de métriques de similarité en utilisant les valeurs des pixels des images d'inférence 3D de référence et les valeurs des pixels des images d'origine de référence correspondantes ; et

et pour déterminer le modèle numérique en appliquant une technique de régression sur les indices de qualité et les métriques de similarité évaluées ;
- un dispositif d'acquisition (2) d'une première image d'une scène avoisinant le véhicule ;
- un dispositif de génération (3) à partir de la première image d'une seconde image d'inférence 3D en appliquant sur la première image une méthode d'inférence 3D ; et
- un dispositif d'évaluation (4) d'une qualité de la seconde image d'inférence 3D comprenant :

o un module d'estimation (4B) de ladite pluralité de métriques de similarité entre ladite première image et ladite seconde image d'inférence 3D ;

o un module d'évaluation (4C) de l'indice de qualité de la seconde image d'inférence 3D en utilisant le modèle numérique et ladite pluralité de métriques de similarité estimées ;

ledit système d'aide à la navigation du véhicule étant configuré pour utiliser la seconde image d'inférence 3D en fonction de l'indice de qualité estimé.

10. Système (1) d'aide selon la revendication 9 dans lequel ledit système est configuré pour éviter au véhicule des obstacles et/ou des collisions.

**Patentansprüche**

1. Verfahren zur Unterstützung der Navigation eines Fahrzeugs, umfassend:

- einen Schritt der Erstellung (E10) eines digitalen Modells (MOD), welches einen Qualitätsindex eines 3D Inferenzbilds definiert, das von einer Anwendung einer 3D Inferenzmethode auf ein Originalbild als Funktion einer Vielzahl von Ähnlichkeitsmetriken stammt, die zwischen dem Originalbild und dem 3D Inferenzbild definiert werden, wobei der genannte Erstellungsschritt eine Gesamtheit von Beobachtungen (OBS, 10) verwendet, welche für eine Vielzahl von 3D Referenz-Inferenzbildern erhalten werden, die von der Anwendung mindestens einer 3D Inferenzmethode auf eine Vielzahl von Referenz-Originalbildern stammen, wobei die genannten Beobachtungen Messwerte von 3D Informationen umfassen, die auf den 3D Referenz-Inferenzbildern dargestellt werden,
- einen Schritt der Erfassung (E20) eines ersten Bilds (IM) einer räumlichen Szene benachbart dem Fahrzeug,
- einen Schritt der Generierung (E30) eines zweiten 3D Inferenzbilds (INF3D-IM) aus dem ersten Bild unter Anwendung einer 3D Inferenzmethode auf das erste Bild,
- einen Schritt der Schätzung (E40) der genannten Vielzahl von Ähnlichkeitsmetriken zwischen dem genannten ersten Bild und dem genannten zweiten 3D Inferenzbild,
- einen Schritt der Evaluierung (E50) des Qualitätsindexes des zweiten 3D Inferenzbilds unter Verwendung des digitalen Modells und der genannten Vielzahl von geschätzten Ähnlichkeitsmetriken, und
- als Funktion des geschätzten Qualitätsindexes (E60), einen Schritt der Verwendung (E70) des zweiten 3D Inferenzbilds zur Unterstützung der Navigation des Fahrzeugs,

wobei der Schritt der Erstellung des digitalen Modells umfasst:

- einen Schritt der Evaluierung (E12, E13) für jede der Beobachtungen:

∘ des Qualitätsindexes, der von dem digitalen Modell unter Verwendung der Pixelwerte der 3D Referenz-Inferenzbilder und der Messwerte der 3D Informationen, die von diesen Pixeln dargestellt werden, definiert wird, und
∘ der Vielzahl von Ähnlichkeitsmetriken unter Verwendung der Pixelwerte der 3D Referenz-Inferenzbilder und der Pixelwerte der entsprechenden Referenz-Originalbilder, und

- einen Schritt der Bestimmung (E15) des digitalen Modells unter Anwendung einer Regressionstechnik auf die Qualitätsindices und die Ähnlichkeitsmetriken, die in dem Schritt der Evaluierung evaluiert werden.

2. Verfahren nach Anspruch 1, wobei das digitale Modell (MOD) eine lineare Funktion der Vielzahl von Ähnlichkeitsmetriken ist.

3. Verfahren nach Anspruch 1 oder 2, wobei die Regressionstechnik auf einer Lasso-Methode basiert.

4. Verfahren nach einem der Ansprüche 1 bis 3, wobei das zweite 3D Inferenzbild eine Tiefenkarte darstellt und das digitale Modell einen Qualitätsindex entsprechend einem Pixelprozentsatz des 3D Inferenzbilds mit Werten definiert, die eine logarithmische oder relative Abweichung kleiner als eine erste vorherbestimmte Schwelle in Bezug auf die Messwerte der 3D Informationen, die auf diesen Pixeln dargestellt werden, aufweisen.

5. Verfahren nach Anspruch 4, wobei die erste Schwelle gleich 0,1 ist.

**6.** Verfahren nach einem der Ansprüche 1 bis 3, wobei das zweite 3D Inferenzbild eine Orientierungskarte darstellt und das digitale Modell einen Qualitätsindex entsprechend einem Pixelprozentsatz des 3D Inferenzbilds mit Werten definiert, die eine mittlere Abweichung oder einen Medianwert kleiner als eine zweite vorherbestimmte Schwelle in Bezug auf die Messwerte der 3D Informationen, die auf diesen Pixeln dargestellt werden, aufweisen.

**7.** Verfahren nach Anspruch 6, wobei die zweite Schwelle gleich 30° ist.

**8.** Verfahren nach einem der Ansprüche 1 bis 7, wobei die genannte Vielzahl von Ähnlichkeitsmetriken ausgewählt wird aus:

- einer Norm L-1 oder L-2, die zwischen den Pixelwerten des 3D Inferenzbilds und den Pixelwerten des entsprechenden Originalbilds evaluiert wird,
- einem skalaren Produkt, das evaluiert wird zwischen einer Matrix, welche die Pixelwerte des 3D Inferenzbilds darstellt, und einer Matrix, welche die Pixelwerte des entsprechenden Originalbilds darstellt,
- einem generalisierten Jaccard-Index, der evaluiert wird zwischen einer Gesamtheit, die aus Pixelwerten des 3D Inferenzbilds gebildet wird, und einer Gesamtheit, die aus Pixelwerten des entsprechenden Originalbilds gebildet wird,
- einer statistischen Korrelation, die zwischen den Pixelwerten des 3D Inferenzbilds und den Pixelwerten des entsprechenden Originalbilds evaluiert wird,
- einer gegenseitigen Information, die zwischen den Pixelwerten des 3D Inferenzbilds und den Pixelwerten des entsprechenden Originalbilds evaluiert wird, und
- einem strukturellen Ähnlichkeitsindex, der zwischen den Pixelwerten des 3D Inferenzbilds und den Pixelwerten des entsprechenden Originalbilds evaluiert wird.

**9.** System (1) zur Unterstützung der Navigation eines Fahrzeugs, umfassend:

- eine Vorrichtung zur Erstellung (4A) eines digitalen Modells, welches einen Qualitätsindex eines als 3D Inferenz bezeichneten Bilds definiert, das von einer Anwendung einer 3D Inferenzmethode auf ein Originalbild als Funktion einer Vielzahl von Ähnlichkeitsmetriken stammt, die zwischen dem Originalbild und dem 3D Inferenzbild definiert werden, wobei die genannte Erstellungsvorrichtung dafür ausgelegt ist, um eine Gesamtheit von Beobachtungen zu verwenden, welche für eine Vielzahl von 3D Referenz-Inferenzbildern erhalten werden, die von der Anwendung mindestens einer 3D Inferenzmethode auf eine Vielzahl von Referenz-Originalbildern stammen, wobei die genannten Beobachtungen Messwerte von 3D Informationen umfassen, die auf den 3D Referenz-Inferenzbildern dargestellt werden, wobei die Vorrichtung zur Erstellung eines digitalen Modells außerdem dafür ausgelegt ist, um für jede der Beobachtungen zu evaluieren:

  ◦ den Qualitätsindex, der von dem digitalen Modell unter Verwendung der Pixelwerte der 3D Referenz-Inferenzbilder und der Messwerte der 3D Informationen, die von diesen Pixeln dargestellt werden, definiert wird, und
  ◦ die Vielzahl von Ähnlichkeitsmetriken unter Verwendung der Pixelwerte der 3D Referenz-Inferenzbilder und der Pixelwerte der entsprechenden Referenz-Originalbilder, und

  und um das digitale Modell unter Anwendung einer Regressionstechnik auf die Qualitätsindices und die evaluierten Ähnlichkeitsmetriken zu bestimmen,
- eine Vorrichtung zur Erfassung (2) eines ersten Bilds einer Szene benachbart dem Fahrzeug,
- eine Vorrichtung zur Generierung (3) eines zweiten 3D Inferenzbilds aus dem ersten Bild unter Anwendung einer 3D Inferenzmethode auf das erste Bild, und
- eine Vorrichtung zur Evaluierung (4) einer Qualität des zweiten 3D Inferenzbilds, umfassend:

  ◦ ein Modul zur Schätzung (4B) der genannten Vielzahl von Ähnlichkeitsmetriken zwischen dem genannten ersten Bild und dem genannten zweiten 3D Inferenzbild,
  ◦ ein Modul zur Evaluierung (4C) des Qualitätsindexes des zweiten 3D Inferenzbilds unter Verwendung des digitalen Modells und der genannten Vielzahl von geschätzten Ähnlichkeitsmetriken, und

wobei das System zur Unterstützung der Navigation des Fahrzeugs dafür ausgelegt ist, um das zweite 3D Inferenzbild als Funktion des geschätzten Qualitätsindexes zu verwenden.

**10.** Unterstützungssystem (1) nach Anspruch 9, wobei das genannte System dafür ausgelegt ist, um für das Fahrzeug Hindernisse und/oder Kollisionen zu vermeiden.

**Claims**

1.  A method of assisting driving a vehicle, the method comprising:

    • a construction step (E10) for constructing a digital model (MOD) defining a quality index for a 3D inference image resulting from applying a 3D inference method to an original image as a function of a plurality of similarity metrics defined between the original image and the 3D inference image, said construction step using a set of observations (OBS, 10) obtained for a plurality of reference 3D inference images resulting from applying at least one 3D inference method to a plurality of reference original images, said observations comprising measured values for 3D information represented on the reference 3D inference images;
    • an acquisition step (E20) for acquiring a first image (IM) of a three-dimensional scene in the vicinity of the vehicle;
    • a generation step (E30) for using the first image to generate a 3D inference second image (INF3D-IM) by applying a 3D inference method to the first image;
    • an estimation step (E40) for estimating said plurality of similarity metrics between said first image and said 3D inference second image;
    • an evaluation step (E50) for evaluating the quality index of the 3D inference second image by using the digital model and said plurality of estimated similarity metrics; and
    • as a function of the quality index as estimated (E60), a utilization step (E70) for using the 3D inference second image to assist driving the vehicle;

    wherein the step of constructing the digital model comprises:

    • an evaluation step (E12, E13) for evaluating, for each of the observations:

        o the quality index defined by the digital model by using the pixel values of the reference 3D inference images and the measured values of the 3D information represented by those pixels; and
        o the plurality of similarity metrics by using the pixel values of the reference 3D inference images and the pixel values of the corresponding reference original images; and

    • a determination step (E15) for determining the digital model by applying a regression technique to the quality indices and the similarity metrics evaluated during the evaluation step.

2.  A method according to claim 1 wherein the digital model (MOD) is a linear function of the plurality of similarity metrics.

3.  A method according to claim 1 or claim 2, wherein the regression technique relies on a lasso method.

4.  A method according to any one of claims 1 to 3, wherein the 3D inference second image is representative of a depth map and the digital model defines a quality index corresponding to a percentage of pixels of the 3D inference image having values presenting a logarithmic or relative difference relative to measured values of the 3D information represented by those pixels that is less than a first predetermined threshold.

5.  A method according to claim 4 wherein the first threshold is equal to 0.1.

6.  A method according to any one of claims 1 to 3, wherein the 3D inference second image is representative of an orientation map and the digital model defines a quality index corresponding to a percentage of pixels of the 3D inference image having values presenting a mean difference or a median value relative to measured values of the 3D information represented by those pixels that is less than a second predetermined threshold.

7.  A method according to claim 6 wherein said second threshold is equal to 30°.

8.  A method according to any one of claims 1 to 7, wherein said plurality of similarity metrics is selected from:

    • an L-1 or an L-2 norm evaluated between the pixel values of the 3D inference image and the pixel values of the corresponding original image;
    • a scalar product evaluated between a matrix representing the pixel values of the 3D inference image and a matrix representing the pixel values of the corresponding original image;
• a generalized Jaccard index evaluated between a set formed by the pixel values of the 3D inference image and a set formed by the pixel values of the corresponding original image;
• a statistical correlation evaluated between the pixel values of the 3D inference image and the pixel values of the corresponding original image;
• mutual information evaluated between the pixel values of the 3D inference image and the pixel values of the corresponding original image; and
• a structural similarity index evaluated between the pixel values of the 3D inference image and the pixel values of the corresponding original image.

9. An assistance system (1) for assisting driving a vehicle, the system comprising:

• a construction device (4A) for constructing a digital model defining a quality index for a "3D inference" image resulting from applying a 3D inference method to an original image as a function of a plurality of similarity metrics defined between the original image and its 3D inference image, said construction device being configured to use a set of observations obtained for a plurality of reference 3D inference images resulting from applying at least one 3D inference method to a plurality of reference original images, said observations comprising measured values for 3D information represented on the reference 3D inference images, and said construction device for constructing the digital model also being configured to evaluate, for each of the observations:

o the quality index defined by the digital model by using the pixel values of the reference 3D inference images and the measured values of the 3D information represented by those pixels; and
o the plurality of similarity metrics by using the pixel values of the reference 3D inference images and the pixel values of the corresponding reference original images;

and to determine the digital model by applying a regression technique to the quality indices and the evaluated similarity metrics;
• an acquisition device (2) for acquiring a first image of a three-dimensional scene in the vicinity of the vehicle;
• a generation device (3) for using the first image to generate a 3D inference second image by applying a 3D inference method to the first image; and
• an evaluation device (4) for evaluating the quality of the 3D inference second image, the evaluation device comprising:

o an estimation module (4B) for estimating said plurality of similarity metrics between said first image and said 3D inference second image; and
o an evaluation module (4C) of evaluating the quality index of the 3D inference second image by using the digital model and said plurality of estimated similarity metrics;

said system for assisting driving the vehicle being configured to use the 3D inference second image as a function of the estimated quality index.

10. An assistance system (1) according to claim 9, wherein said system is configured to cause the vehicle to avoid obstacles and/or collisions.

FIG.1A  FIG.1B  FIG.1C

FIG.2

FIG.3

EP 3 488 383 B1

FIG.4

**Construction du modèle numérique MOD**

i=0

i++ — E11

Evaluation de l'indice de qualité
Qidx_obs(i) pour l'observation OBS(i) — E12

Calcul des métriques de similarité
$(\zeta 1(i)...\zeta p(i))$ pour l'observation OBS(i) — E13

oui — i<N ? — E14

non

Application d'une technique de
régression (méthode du Lasso) — E15

Obtention du modèle numérique MOD — E16

Stockage du modèle numérique MOD — E17

E10

Acquisition d'une image IM d'une scène spatiale — E20

Génération d'une image d'inférence 3D INF3D-IM à partir de l'image IM — E30

Estimation des métriques de similarité
$(\zeta 1...\zeta p)$ entre les images IM et INF3D-IM — E40

Evaluation de l'indice de qualité Qidx(INF3D-IM) à partir
des métriques estimées et du modèle numérique MOD — E50

E60

non — Qidx(INF3D-IM) > TH3 ? — oui

Image d'inférence
3D INF3D-IM rejetée — E80

E70 — Utilisation de l'image d'inférence
3D INF3D(IM) pour aider la
navigation du véhicule

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE DELAGE et al.** *Automatic Single-Image 3D Reconstructions of Indoor Manhattan World Scenes,* 2005
- **DE HOIEM et al.** *Seeing the World Behing the Images Spatial Layout For 3D Scene Understanding,* 2005
- **DE KARSCH et al.** *Depth Transfert : Depth Extraction from Video Using Non-paramatric Smapling,* 2014
- **DE R. TIBSHIRANI.** Regression shrinkage and selection via the lasso. *J. Roy Statistical Society Serie B,* 1996, vol. 58 (1), 267-288
- **DE J. MICHELS et al.** High speed Obstacle Avoidance using Monocular Vision. *Proceedings of the 22nd International Conference on Machine Learning,* 2005
- **DE X. CHEN et al.** Monocular 3D Object Detection for Autonomous Driving. *International Conference on Computer Vision (ICCV),* 2015